**Europäisches Patentamt**

**European Patent Office**

**Office européen des brevets**

(19)

(11) Publication number : **0 455 614 B1**

# EUROPEAN PATENT SPECIFICATION

(12)

(45) Date of publication of patent specification :
07.09.94 Bulletin 94/36

(51) Int. Cl.⁵ : **H04B 7/26, H04Q 7/04**

(21) Application number : **91850066.1**

(22) Date of filing : **13.03.91**

(54) **A method of predicting measuring values for handoff decisions in a mobile radio communication system.**

(30) Priority : **03.05.90 SE 9001590**

(43) Date of publication of application :
06.11.91 Bulletin 91/45

(45) Publication of the grant of the patent :
07.09.94 Bulletin 94/36

(84) Designated Contracting States :
DE ES FR GB IT

(56) References cited :
EP-A- 0 239 467
US-A- 4 556 760
US-A- 4 811 421
IEEE INTERNATIONAL SYMPOSIUM ON CIR-
CUITS AND SYSTEMS, PROC., 28-30 Apirl
1980, pages 1143-1157
PROCEEDINGS OF THE IEEE, Vol. 64, No. 8,
August 1980, pages 1151-1162

(73) Proprietor : **TELEFONAKTIEBOLAGET L M
ERICSSON
Patent and Trademark Department
S-126 25 Stockholm (SE)**

(72) Inventor : **Gudmundson, Perols Björn Olof
Orsavägen 13
S-191 71 Sollentuna (SE)**
Inventor : **ISRAELSSON Per Viktor
Ryttarvägen 17
S-183 67 Täby (SE)**

(74) Representative : **Mrazek, Werner et al
Dr. Ludwig Brann Patentbyra AB
Drottninggatan 7
Box 1344
S-751 43 Uppsala (SE)**

EP 0 455 614 B1

## Description

The present invention relates to a method of predicting measurement values in a mobile radio communication system.

In a mobile radio communication system, especially a mobile telephony system, the quality of the connection between one or several base stations and a mobile station is measured at the latter, and the measurement values measured at the mobile station are sent back to a base station for evaluation in for instance a mobile services switching centre connected to this base station. Alternatively or as a supplement hereto the signals transmitted by the mobile station can be measured in one or several base stations and the results can be sent to the mobile services switching centre. The measured values form the basis of for instance handoff decisions. Typical parameters that are measured are for instance signal strength and bit error rate.

Since the measurement values contain noise it is inappropriate to directly take the latest measurement value as the only basis for said decision. Therefore the measurement values are processed before they are used in the decision process. Three methods have previously been used for this purpose, namely averaging, median value determination and weighted averaging. Furthermore, to facilitate the decision process it is desirable to be able to predict the measurement value signal in order to be prepared for what will happen in the next moment, so that a decision can be made before the connection is to poor. Of said three mentioned methods the weighted averaging comprises an attempt to predict the measurement signal. Since the mobile station has varying velocity at different times it is, however, difficult to set the right weighting factors in the averaging process.

US-A-4 556 760 describes a method of predicting future measurements for handoff decisions by a differentiating method that calculates the slope of the measured signal to predict future values.

## SUMMARY OF INVENTION

An object of the invention is to eliminate the above problem and to provide a method with which the measurement values can more accurately be predicted.

Such a method in accordance with the invention is characterized by the features of claim 1.

US-A-4 811 421 describes a method of predicting future power measurements in which a filter is used. The coefficients of this filter are constant, but the possibility of changing these coefficients over time is mentioned.

Proceedings of the IEEE, Vol. 64, No. 8, 1976, pages 1151-1162 describes an adaptive predictor as such.

## BRIEF DESCRIPTION OF THE DRAWING

The invention, further objects and advantages obtained by the invention are best understood with reference to the following description and the attached drawings in which:

Fig. 1    shows a cellular mobile telephony system;
Fig. 2    shows the principle of a general adaptive filter;
Fig. 3    shows the principle of an adaptive transversal filter;
Fig. 4    shows the principle of an adaptive predictor suitable for the method of the present invention.

## DESCRIPTION OF PREFERRED EMBODIMENTS

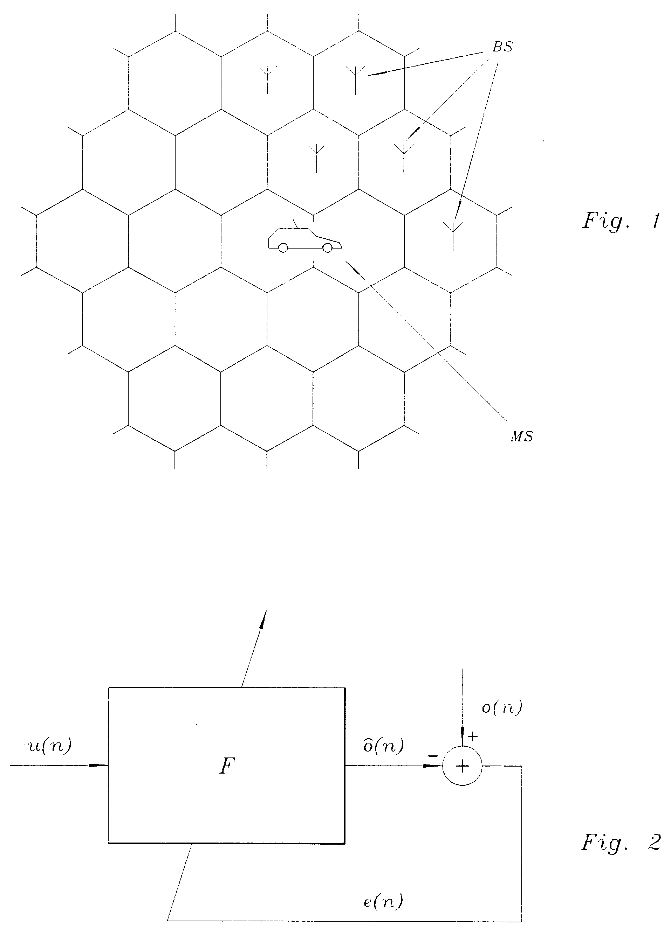

Figure 1 shows the basic structure of a cellular mobile telephony system. Such a system comprises a number of cells, each cell in this embodiment containing one base station BS. For reasons of simplicity only a number of such base stations BS are shown in the figure. The base stations BS are in radio contact with a number of mobile stations MS, of which only one is shown in the figure. Mobile station MS communicates with the base station BS in that cell in which it presently is located. As mobile station MS moves from cell to cell the communication is handed over from the base station BS in one cell to the base station BS in a neighboring cell with a so called handoff.

The basis for the decision when handoff is to be ordered from the base station BS to mobile station MS is formed by for instance continuously measuring the signal strength from the surrounding base stations at mobile station MS and by sending the results of the measurements back to the current base station BS for evaluation. This evaluation can either be done in the base station BS itself or in a mobile services switching centre to which said station BS is connected. The base station BS will therefore receive a stream of measurement values s(n), where n designates discrete points in time.

In accordance with the invention it is now desirable to predict the value of the signal at a later point in time s(n+L) on the basis of already received values s(n), s(n-1), ..., s(n-L), so that a decision regarding handoff can be made at an earlier stage and the handoff order can be transmitted to mobile station MS before the connection has become so poor that the order no longer can be received. An adaptive filter is used for this purpose.

The principle of a general adaptive filter F is shown in Fig. 2. The following notations are used in Fig. 2:

u(n)         = input signal to the adaptive filter F;
ô(n)         = output signal from the adaptive filter F;
o(n)         = desired signal; and
e(n)         = error signal.

The idea behind an adaptive filter is that the coefficients or parameters of the filter are controlled in such a way that the output signal ô(n) resembles the desired signal o(n) as much as possible. This is done by minimizing the power of the error signal e(n), $[E\{e^2(n)\}]$.

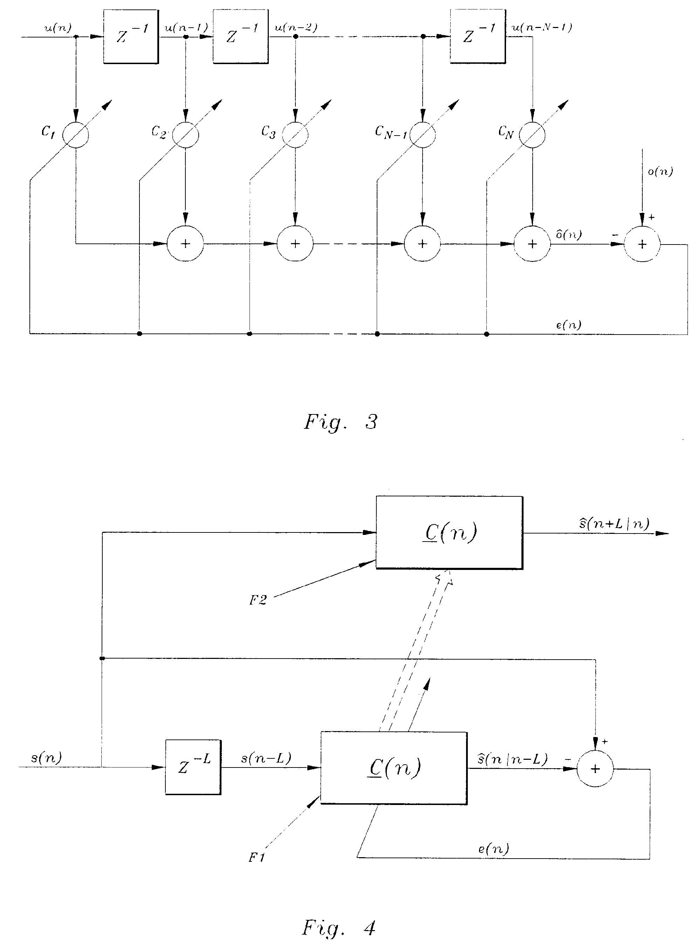

Principles for adjusting coefficients will be described with reference to Figure 3, which shows an adaptive transversal filter.

The filter in Figure 3 comprises N-1 delay elements designated $z^{-1}$, N multiplying filter coefficients $C_1$, $C_2$, ..., $C_N$ and N-1 adders designated +. In one further adder the difference e(n) between the desired signals o(n) and the output signal ô(n) of the filter is formed. This difference signal is used for adjusting the filter coefficients $C_1$, $C_2$, ..., $C_N$ after each input of a new input signal value u(n). Thus, the filter coefficients are time dependent, that is, $C_1$, $C_2$, ..., $C_N = C_1(n)$, $C_2(n)$, ..., $C_N(n)$.

A suitable algorithm is needed for the calculation of new coefficients $C_1$, $C_2$, ..., $C_N$. Two suitable algorithms will be described here, namely the LMS (Least Mean Square) and the RLS (Recursive Least Square) method.

First a number of general definitions are needed. Let

$$\underline{U}(n) = [u(n), u(n - 1), ..., u(n - N + 1)]^T$$

be the input signal vector, where T designates transposing, that is $\underline{U}(n)$ is a column vector. In a similar way let

$$\underline{C}(n) = [C_1(n), C_2(n), ..., C_N(n)]^T$$

be the coefficient vector. With these definitions one obtains

$$ô(n) = \underline{C}^T(n - 1)\cdot\underline{U}(n)$$

Observe that the coefficient vector $\underline{C}$ refers to point n-1 in time, while the input signal vector $\underline{U}$ refers to point n in time. Furthermore, one obtains

$$e(n) = o(n) - ô(n) = o(n) - \underline{C}^T(n - 1)\cdot\underline{U}(n)$$

## LMS algorithm

This algorithm is defined by:

$$e(n) = o(n) - \underline{C}^T(n - 1)\cdot\underline{U}(n)$$
$$\underline{C}(n) = \underline{C}(n - 1) + \mu\cdot\underline{U}(n)\cdot e(n)$$

where $\mu$ is the so called step constant and $\underline{C}(0)$ normally is set to $[0, 0, ..., 0]^T$. Thus, this algorithm is recursive, that is it updates for each new received measurement value. The algorithm is further described in for instance Widrow & Stearns, "Adaptive Signal Processing", Prentice-Hall, 1985 or Haykin, "Adaptive Filter Theory", Prentice-Hall, 1986.

## RLS algorithm

This algorithm is defined by:

$$\underline{T}(n) = \underline{P}(n - 1)\cdot\underline{U}(n)$$
$$\underline{K}(n) = \underline{T}(n)/[\beta + \underline{U}^T(n)\cdot\underline{T}(n)]$$
$$\underline{\underline{P}}(n) = [\underline{\underline{P}}(n - 1) - \underline{K}(n)\cdot\underline{T}^T(n)]/\beta$$
$$e(n) = d(n) - \underline{C}^T(n - 1)\cdot\underline{U}(n)$$
$$\underline{C}(n) = \underline{C}(n - 1) + \underline{K}(n)\cdot e(n)$$

where

$\underline{T}(n)$      = a temporary vector,
$\underline{K}(n)$      = an amplification vector,
$\underline{\underline{P}}(n)$      = the inverse of the autocorrelation matrix for the input signal vector $\underline{U}(n)$, and
$\beta$         = a "forget factor".

Normally

$$\underline{\underline{P}}(0) = p_0\cdot I_{NxN}$$
$$\underline{C}(0) = [0, 0, ..., 0]^T$$

are set as initial values, where

$p_0$         = a large constant, and

$I_{NxN}$ = the unity matrix of order N.

Thus, this algorithm is also recursive. It is further described in the above mentioned book by Haykin.

An adaptive predictor suitable for performing the method in accordance with the present invention is shown in Figure 4. The following designations are used in Figure 4 or correspond to designation in Figure 2 and Figure 3:

s(n) = input signal to the predictor (for instance signal strength measured by mobile station MS);

u(n) $\leftrightarrow$ s(n-L) = input signal to the adaptive filter;

ô(n) $\leftrightarrow$ $\hat{s}$(n | n-L) = output signal from the adaptive filter, where $\hat{s}$(n | n-L) designates the prediction of s(n) L steps forward in time, as calculated at point n-L in time;

o(n) $\leftrightarrow$ s(n) = desired signal;

$z^{-L}$ = a delay of L steps; and

$\hat{s}$(n+L | n) = the prediction of s(n) L steps forward in time, as calculated at point n in time.

An adaptive filter F1, for instance of the type shown in Fig. 3, at point n in time is provided with an input signal s(n-L), which has been delayed L steps, that is which has reached the input of the predictor at point n-L in time. The output signal $\hat{s}$(n | n-L) of the adaptive filter F1 makes a prediction of the value of the input signal at point n in time on the basis of previous input signals to filter F1 before and up to point n-L in time. This prediction is compared to the actual value of the input signal s at point n in time. The difference signal e(n) is used for updating filter coefficients $\underline{C}$(n) in filter F1. These updated coefficients $\underline{C}$(n) are then copied over to a controllable filter F2, for instance of the type shown in Fig. 3 but with the feed back removed, the filter coefficients of which are thus set to $\underline{C}$(n). This copying process is indicated in Fig. 4 by a dashed arrow. Since the input signal s(n) of the predictor also is connected to the controllable filter F2, this will at point n in time as output signal provides a prediction of the value of the input signal s at point n+L in time.

The filter length N can be between 1 and 30, preferably 4 and 10 while the delay L is an integer between 1 and 20, preferably 1 and 4.

In the described embodiment of the invention signals from surrounding base stations are measured in the mobile station. However, it is appreciated that corresponding principles can be used for signals transmitted from the mobile station and measured in the surrounding base stations. Furthermore, the invention has been described in connection with a system where the handoff decision is made in a base station or in a mobile services switching centre. However, there are systems in which the handoff decision is made in the mobile station. The invention can be used also in such systems.

The man skilled in the art appreciates that different changes and modifications of the invention as described herein are possible without departure from the scope of the invention, which is defined in the attached patent claims.

## Claims

1. A handoff method in a mobile radio communication system, **characterized** by
   feeding measured measurement values (s(n)) at discrete points in time, represented by integers n, to a predictor comprising an adaptive filter (F1),
   forming with the aid of the filter coefficients ($\underline{C}$(n)) of said adaptive filter first estimates ($\hat{s}$(n+L | n)) of future measurement values (s(n+L)) at discrete points n+L in time, where L is a positive integer, on the basis of measured measurement values, and
   using said first estimates ($\hat{s}$(n+L | n)) of future measurement values (s(n+L)) before the latter are actually measured for deciding whether handoff should be ordered.

2. The method of claim 1, **characterized** in that
   (a) measurement values delayed L discrete time steps are fed to the adaptive filter (F1) for forming second estimates ($\hat{s}$(n | n-L)) of measurement values at the discrete points n in time,
   (b) that the difference between the second estimate ($\hat{s}$(n | n-L)) and the actual measurement value (s(n)) at each point n in time is used for adjusting the filter coefficients ($\underline{C}$(n)) of the filter (F1) at point n in time,
   (c) that the adjusted filter coefficients ($\underline{C}$(n)) are copied for forming filter coefficients in a controllable filter (F2), and
   (d) that the first estimates ($\hat{s}$(n+L | n)) of future measurement values at points n+L in time are formed in the controllable filter (F2) with the aid of the measured measurement values (s(n)).

3. The method of claim 2, **characterized** in that the filter coefficients ($\underline{C}$(n)) are adjusted with the LMS algorithm.

4. The method of claim 2, **characterized** in that the filter coefficients ($\underline{C}$(n)) are adjusted with the RLS algorithm.

5. The method of any of the preceding claims, **characterized** in that the adaptive filter (F1) comprises between 1 and 30, preferably between 4 and 10 filter coefficients ($\underline{C}$(n)).

6. The method of any of the preceding claims, **characterized** in that L is an integer between 1 and 20, preferably between 1 and 4.

7. The method of any of the preceding claims, **characterized** in that measurement values are measured in a mobile station (MS) and transferred to a base station (BS).

8. The method of claim 7, **characterized** in that the measurement values comprise the signal strength of signals transmitted from base stations (BS) as measured at the mobile station (MS).


## Patentansprüche

1. Weiterreichverfahren in einem mobilen Radiokommunikationssystem, gekennzeichnet durch die Schritte:
Einspeisen gemessener Meßwerte (s(n)) zu diskreten Zeitpunkten, dargestellt durch natürliche Zahlen n, an einen Prediktor mit einem adaptiven Filter (F1),
Bilden mit der Hilfe der Filterkoeffizienten (C(n)) des adaptiven Filters erste Schätzwerte (s(n+L|n)) von Zukunftsmeßwerten (s(n+L)) an diskreten Punkten n+L in der Zeit, wobei L eine positive natürliche Zahl ist, auf der Basis gemessener Meßwerte, und
Benutzen der ersten Schätzwerte (s(n+L|n)), bevor die letzteren tatsächlich gemessen werden, zum Entscheiden ob ein Weiterreichen angeordnet werden sollte.

2. Verfahren nach Anspruch 1, dadurch gekennzeichnet, daß
(a) Meßwerte, verzögert um L diskrete Zeitschritte, eingespeist werden an den adaptiven Filter (F1) zum Bilden zweiter Schätzwerte (s(n|n-L)) der Meßwerte an den diskreten Punkten n in der Zeit,
(b) die Differenz zwischen dem zweiten Schätzwert (s(n|n-L)) und dem tatsächlichen Meßwert (s(n)) an jedem Punkt n in der Zeit benutzt wird zum Einstellen der Filterkoeffizienten ($\underline{C}$(n)) des Filters (F1) am Punkt n in der Zeit,
(c) die eingestellten Filterkoeffizienten ($\underline{C}$(n)) kopiert werden zum Bilden von Filterkoeffizienten in einem steuerbaren Filter (F2), und
(d) die ersten Schätzwerte (s(n+L|n)) der Zukunftsmeßwerte an Punkten n+L in der Zeit gebildet werden in dem steuerbaren Filter (F2) mit Hilfe der gemessenen Meßwerte (s(n)).

3. Verfahren nach Anspruch 2, dadurch gekennzeichnet, daß die Filterkoeffizienten ($\underline{C}$(n)) eingestellt werden mit dem LMS-Algorithnus.

4. Verfahren nach Anspruch 2, dadurch gekennzeichnet, daß die Filterkoeffizienten ($\underline{C}$(n)) eingestellt werden mit dem RLS-Algorithmus.

5. Verfahren nach einem der vorhergehenden Ansprüche, dadurch gekennzeichnet, daß der adaptive Filter (F1) zwischen 1 und 30, vorzugsweise 4 und 10 Filterkoeffizienten ($\underline{C}$(n)) umfaßt.

6. Verfahren nach einem der vorhergehenden Ansprüche, dadurch gekennzeichnet, daß L eine natürliche Zahl zwischen 1 und 20, vorzugsweise zwischen 1 und 4 ist.

7. Verfahren nach einem der vorhergehenden Ansprüche, dadurch gekennzeichnet, daß die Meßwerte gemessen werden in einer Mobilstation (MS) und an eine Basisstation (BS) übertragen werden.

8. Verfahren nach Anspruch 7, dadurch gekennzeichnet, daß die Meßwerte die Signalsstärke von Signalen umfassen, welche von Basisstationen (BS), wie gemessen an der Mobilstation (MS), übertragen werden.

**Revendications**

1. Un procédé de transfert dans un système de radiocommunication mobile, caractérisé en ce que :
   on applique à un prédicteur consistant en un filtre adaptatif (F1), des valeurs de mesure (s(n)) qui sont mesurées à des instants discrets, représentés par des entiers n,
   on forme à l'aide des coefficients de filtre ($\underline{C}$(n)) de ce filtre adaptatif des premières estimations ($\hat{s}$(n+L|n)) de valeurs de mesure futures (s(n+L)) à des instants discrets n+L, en désignant par L un entier positif, sur la base de valeurs de mesure qui ont été mesurées, et
   on utilise ces premières estimations ($\hat{s}$(n+L|n)) de valeurs de mesure futures (s(n+L)) avant que ces dernières ne soient réellement mesurées, pour décider si un transfert doit être ordonné.

2. Le procédé de la revendication 1, caractérisé en ce que
   (a) des valeurs de mesure retardées de L intervalles de temps discrets sont appliquées au filtre adaptatif (F1) pour former des secondes estimations ($\hat{s}$(n|n-L)) de valeurs de mesure aux instants discrets n,
   (b) la différence entre la seconde estimation ($\hat{s}$(n|n-L)) et la valeur de mesure réelle (s(n)) à chaque instant n est utilisée pour ajuster les coefficients de filtre ($\underline{C}$(n)) du filtre (F1) à l'instant n,
   (c) les coeffients de filtre ($\underline{C}$(n)) ajustés sont copiés pour former des coefficients de filtre dans un filtre commandé (F2), et
   (d) les premières estimations ($\hat{s}$(n+L|n)) de valeurs de mesure futures à des instants n+L sont formées dans le filtre commandé (F2) à l'aide des valeurs de mesure (s(n)) qui ont été mesurées.

3. Le procédé de la revendication 2, caractérisé en ce que les coefficients de filtre ($\underline{C}$(n)) sont ajustés avec l'algorithme LMS.

4. Le procédé de la revendication 2, caractérisé en ce que les coefficients de filtre ($\underline{C}$(n)) sont ajustés avec l'algorithme RLS.

5. Le procédé de l'une quelconque des revendications précédentes, caractérisé en ce que le filtre adaptatif (F1) comprend entre 1 et 30, et de préférence entre 4 et 10, coefficients de filtre ($\underline{C}$(n)).

6. Le procédé de l'une quelconque des revendications précédentes, caractérisé en ce que L est un entier compris entre 1 et 20, et de préférence entre 1 et 4.

7. Le procédé de l'une quelconque des revendications précédentes, caractérisé en ce que les valeurs de mesure sont mesurées dans une station mobile (MS) et elles sont transférées vers une station de base (BS).

8. Le procédé de la revendication 7, caractérisé en ce que les valeurs de mesure comprennent le niveau de signaux qui sont émis par des stations de base (BS), tel qu'il est mesuré à la station mobile (MS).

Fig. 1

Fig. 2

Fig. 3

Fig. 4